# EUROPÄISCHE PATENTSCHRIFT

(11) **EP 0 444 059 B1**
(45) Veröffentlichungstag und Bekanntmachung des Hinweises auf die Patenterteilung: **08.09.1993**
(21) Anmeldenummer: 89912207.1
(22) Anmeldetag: 07.11.1989
(51) Int. Cl.: H02K 9/18, F03B 13/10

(54) **GETRIEBE-GENERATOR-SCHACHTKUEHLUNG**
COOLING SYSTEM FOR THE CHAMBER OF A GENERATOR/TRANSMISSION UNIT
SYSTEME DE REFROIDISSEMENT POUR CUVE D'ENSEMBLE GENERATEUR-ENGRENAGE

(30) Priorität: 10.11.1988 AT 2759/88
(43) Veröffentlichungstag der Anmeldung: 04.09.1991
(73) Patentinhaber: Elin Energieversorgung Gesellschaft m.b.H., A-1140 Wien (AT)
(72) Erfinder: SINHUBER, Franz, A-1140 Wien (AT)
(74) Vertreter: Rieberer, Stefan, Dipl.-Ing.
(86) Internationale Anmeldenummer: AT8900100
(87) Internationale Veröffentlichungsnummer: WO9005403

(56) Entgegenhaltungen:
- CH-A- 315 990
- DE-C- 748 113
- FR-A- 1 022 783
- FR-A- 1 129 191
- FR-A- 2 209 240
- US-A- 2 862 120

## Beschreibung

Die Erfindung betrifft ein Kühlsystem für einen in einem mit Fließwasser umgebenen Schacht angeordneten Generator mit einer Turbine, wobei vorzugsweise zwischen Generator und Turbine ein Getriebe vorgesehen ist.

Ein derartiges Kühlsystem ist aus der FR-A-1 022 783 bekannt.

Bisher wurde die Kühlluft des Generators, die auch unter Überdruck stehen kann, direkt als Wärmeträger zur Abgabe der Verlustwärme herangezogen. Die bisherigen Ausführungen sehen u. a. ein- oder mehrstufige Gebläse vor. Damit kann die Wärmeübergangszahl dergestalt vergrößert werden, daß sie für den Wärmeaustausch ausreicht.

Der Nachteil dieser Anordnung ist dadurch gegeben, daß die Eigenlüftung mit Lüftern am Generatormotor nicht mehr ausreicht, um den Widerstand in diesen Luftwegen zu überwinden. Es sind somit Zusatzlüfter, die bereits einen erheblichen Leistungsbedarf und hohen Geräuschpegel haben, erforderlich. In Fällen, wo dieser Lüfter im Schacht eingebaut ist, wird beim Lüfterausfall eine Betriebsunterbrechung eintreten.

Ein weiterer Nachteil ist dadurch gegeben, daß die Anpassung der Kühlluftmenge an die jeweilige Verlustleistung des Generators bei Teillast und am die Umgebungstemperatur zwischen Sommer und Winter mit drehzahlumschaltbaren Lüftermotoren und Klappensystemen zur Luftführung nur sehr grobstufig und unvollkommen erreicht wird. Für die betriebsmäßige Wartung ist es auch nachteilig, daß in den Fällen, wo der Lüfter im Schacht angeordnet ist, das Personal in den Druckluftstrom treten muß.

Aus der FR-PS Nr. 1267170 ist ein Rohrturbinengenerator bekannt, dessen Gehäusekuppel als Wärmetauscher ausgebildet ist. Derartige Rohrturbinenaggregate sind jedoch erst ab einer gewissen Leistungsgröße, die etwa bei 10 MVA liegt, überlegenswert.

Es wurde auch eine Kühlung der Maschine mit dem Fließwasser direkt versucht. Dieser Vorgang ist aber durch die rigorose Verschmutzung des Wassers technisch nicht mehr möglich.

Aufgabe der Erfindung ist es, ein Kühlsystem der eingangs genannten Art zu schaffen, das einerseits die obigen Nachteile vermeidet und das anderseits in Anlagen mit seriell gefertigten Trommelläufern gemäß der Mittelmaschinenreine eingesetzt werden kann.

Das erfindungsgemäße Kühlsystem ist dadurch gekennzeichnet, daß das den Generator kühlende Medium eines primären Kühlkreislaufs in entsprechenden Wärmetauscheren eines sekundären Kühlkreislaufs und das Medium des sekundären Kühlkreislaufs in Kühlradiatoren, die mit der vorzugsweise metallischen Schachtwand gebildet sind, rückkühlbar ist.

Mit der Erfindung ist es erstmals möglich, Unterwasseraggregate herzustellen, die auch in kleineren Leistungsbereichen wirtschaftlich vertretbar sind. Dies ergibt sich vor allem daraus, daß Generatoren praktisch aus der Serienproduktion Verwendung finder. Bei allen Einzelfertigungen ist der technische und damit finanzielle Aufwand derart hoch, daß die Wirtschaftlichkeit nicht mehr gegeben ist. Um nun derartige Serienprodukte für die oben beschriebenen Anlagen einsetzen zu können, dient das erfindungsgemäße Kühlsystem. Der Vorteil des erfindungsgemäßen Kühlsystems ist vor allem darin zu sehen, daß die Summe der Pumpenleistungen und die höhere Leistung der Eigenbelüftungen geringere Gesamtverluste ergibt, als bei den bisher verwendeten Hochdruckventilatoren.

Gemäß einem besonderen Merkmal der Erfindung sind die Wärmetauscher einerseits Luft-Wasser-Kühler für die Generatorkühlluft und anderseits Öl-Wasser-Kühler für die Lagerölkühlung bzw. Getriebeölkühlung.

Bisher war es notwendig, die Ölkühlung und die Luftkünlung zu trennen. Es mußte also Vorsorge für die Rückkühlung des Öles und getrennt davon für die Rückkühlung der Luft Sorge getragen werden. Mit der Erfindung ist es möglich die entsprechenden Wärmetauscher auf den gemeinsamen sekundären Kühlkreislauf wirken zu lassen.

Nach einer Ausgestaltung der Erfindung weist die außen direkt vom Fließwasser umspülte aus einem Blechmantel bestehende Schachtwand an der Generatorseite vertikale oder horizontale kanalartige Kühltaschen auf. Dadurch wird die anfallende Verlustwärme sicher abgeführt. Ferner ist das Kühlmittel im geschlossenen Kreislauf durch Pumpen mit geringem Leistungsbedarf umwälzbar.

Gemäß einem weiteren Merkmal der Erfindung sind die Kühltaschen beidseitig über Sammelkanäle verbunden. Da derartige Konstruktionen überaus stabil und robust ausgeführt werden müssen, bietet diese herstellungsgemäße einfache Ausführung ihre Vorteile.

Gemäß einer weiteren Ausgestaltung der Erfindung sind die Kühltaschen aus auf die Schachtwand aufgeschweißten Stegen die über eine Deckwand abgeschlossen sind, gebildet. Diese Konstruktion ermöglicht die Herstellung mit guten Schweißkräften, die jedoch kein hochqualifiziertes Fachpersonal sein müssen. Die Herstellungskosten halten sich somit in einem vertretbaren Rahmen.

Nach einer weiteren Ausgestaltung der Erfindung weist zur Befestigung der Deckwand an den Stegen, die Deckwand Ausnehmungen, vorzugsweise Bohrungen auf, die mittels eines Schweißvorganges mit Schweißmaterial gefüllt sind. Dieser einfache Herstellungsvorgang ist, wie bereits erwähnt, auch in Hinblick auf die Herstellungskosten zu sehen.

Die Erfindung wird an Hand eines in der Zeichnung dargestellten Ausführungsbeispieles näher erlautert.

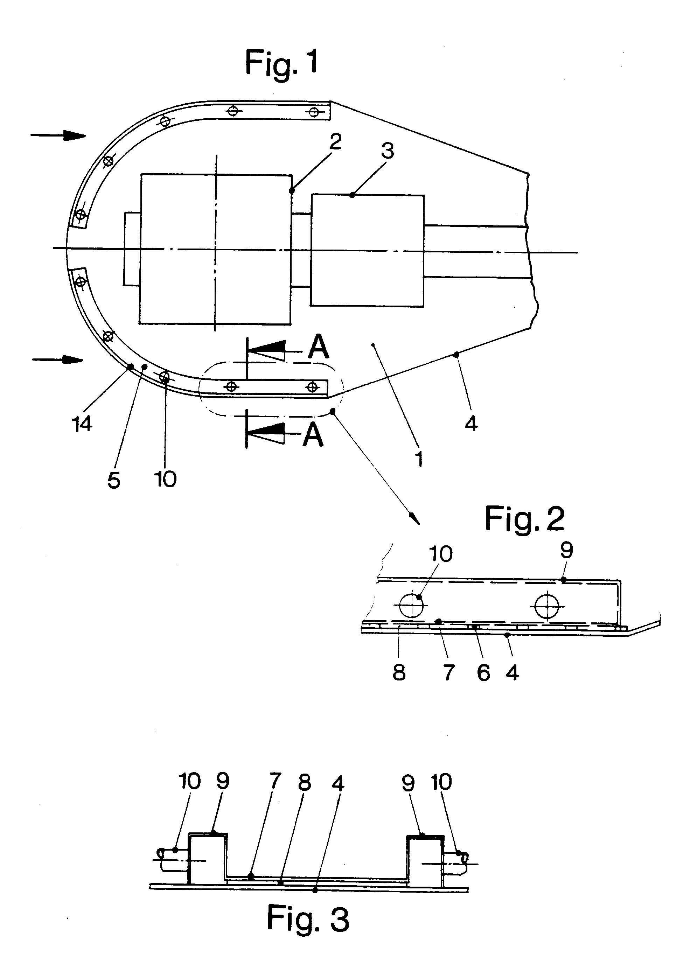

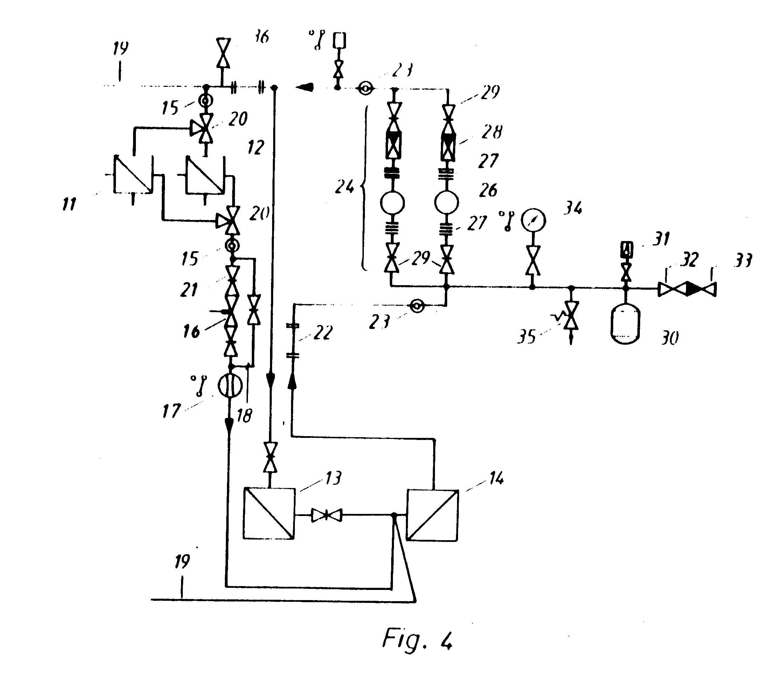

Die Fig. 1 zeigt eine schematische Draufsicht auf den Schacht, Fig. 2 das Detail A der Fig. 1, Fig. 3 einen Schnitt A-A der Fig. 1 und Fig. 4 das Kühlschema.

In einem vom Fließwasser umgebenen Schacht 1 wird ein Generator 2, dem ein Getriebe 3 vorgeschaltet ist, angeordnet. Das Getriebe 3 wird von einer nicht dargestellten langsam laufenden Turbine angetrieben. Die Schachtwand 4 ist aus einem Blechmantel gebildet. Gegen die Fließwasserrichtung ist die Schachtwand 4 als Kühlradiator 5 ausgebildet.

Gemäß der Fig. 2 weist die Schachtwand 4 auf der Generatorseite aufgeschweißte Stege 6 auf, die mit einer Deckwand 7 abgeschlossen sind. Dadurch werden kanalartige Kühltaschen 8 gebildet, durch die das Medium des sekundären Kühlkreislaufes fließt. Zur Befestigung der Deckwand 7 an den Stegen 6 weist die Deckwand an den Befestigungsstellen Bohrungen auf, so daß die Deckwand 7 mit den Stegen 6 verschweißt werden kann. Zur Zuführung bzw. Abführung des sekundären Kühlmediums sind die Kühltaschen 8 über Sammelkanäle 9, die mit Ein- und Auslässen 10 versehen sind, verbunden.

Gemäß der Fig. 4 wird mit diesem Kühlsystem einerseits die Generatorkühlluft und anderseits das Lager- bzw. Getriebeöl rückgekühlt. Für die Lager- bzw. Getriebeölkühlung sind die Öl-Wasser-Kühler 11, 12 und für die Generatorluftkühlung ist der Luft-Wasser-Kühler 13 vorgesehen. Der sekundäre Kühlkreislauf wird seinerseits im Doppelmantelkühler der Kühlradiatoren 14 gekühlt.

Vor und nach den Öl-Wasser-Kühlern 11, 12 sind Dreiweghänne 20 angeordnet, denen jeweils eine Meßstelle 15 für die Temperatur nachgeschaltet wird. In die Leitung von den Öl-Wasser-Kühlern 11, 12 zu den Kühlradiatoren 14 sind ferner ein Membranschieber 21, ein Temperaturregler 16 und ein Strömungswächter 17 eingebaut. Der Membranschieber 15 und der Temperaturregler 16 können über eine By-Pass-Leitung 18 überbrückt werden. Ferner kann auch dieser Kühlkreis von einem Reglerkühlkreis 19 überlagert werden.

Der Luft-Wasser-Kühler 13 ist mit seinem Sekundärkreis, in den ein Ventil angeordnet ist, einerseits direkt mit den Kühlradiatoren 14 verbunden. Anderseits wird dieser Sekundärkreis über eine Meßstrecke 22, der eine Meßstelle 23 für den Druck nachgeschaltet ist und dem Kühlwasserpumpenkreis 24, der einen gleichen parallelen Kreis aufweisen kann, einer weiteren Druckmeßstelle 23 mit Druckschalter, einem Druckschalter 25 und einem Ventil geschlossen.

Der Kühlwasserpumpe 26 ist jeweils ein Kompensator 27 vor- bzw. nachgeschaltet. Darüberhinaus ist ein Rückschlagventil 28 und ein Membranschieber 29 vorgesehen. Ferner ist auch ein Expansionsgefäß 30 mit einen automatischen Entlüfungsventil 31 sowie einem Absperr- 32 und Rückschlagventil 33 vorgesehen. Überwacht wird dieser Kreis von einem Kontaktmanometer 34 und einem Überdruckventil 35.

Komplettiert wird das Kühlsystem über das Füllventil 36.

## Patentansprüche

1. Kühlsystem für einen in einem mit Fließwasser umgebenen Schacht angeordneten Generator (2) mit einer Turbine, wobei vorzugsweise zwischen Generator (2) und Turbine ein Getriebe (3) vorgesehen ist, dadurch gekennzeichnet, daß das den Generator (2) kühlende Medium eines primären Kühlkreislaufs in entsprechenden Wärmetauschern (11, 12, 13) eines sekundären Kühlkreislaufs und das Medium des sekundären Kühlkreislaufes in Kühlradiatoren (14), die mit der vorzugsweise metallischen Schachtwand (4) gebildet sind, rückkühlbar ist.

2. Kühlsystem nach Anspruch 1, dadurch gekennzeichnet, daß die Wärmetauscher (11, 12, 13) einerseits Luft-Wasser-Kühler (13) für die Generatorkühlluft und anderseits Öl-Wasser-Kühler (11, 12) für die Lagerölkühlung bzw. Getriebeölkühlung sind.

3. Kühlsystem nach Anspruch 1 oder 2, dadurch gekennzeichnet, daß die außen direkt vom Fließwasser umspülte aus einem Blechmantel bestehende Schachtwand (4) an der Generatorseite vertikale oder horizontale kanalartige Kühltaschen (8) aufweist.

4. Kühlsystem nach Anspruch 3, dadurch gekennzeichnet, daß die Kühltaschen (8) beidseitig über Sammelkanäle (9) verbunden sind.

5. Kühlsystem nach Anspruch 3 oder 4, dadurch gekennzeichnet, daß die Kühltaschen (8) aus auf die Schachtwand (4) aufgeschweißten Stegen (6) die über eine Deckwand (7) abgeschlossen sind, gebildet sind.

6. Kühlsystem nach Anspruch 5, dadurch gekennzeichnet, daß zur Befestigung der Deckwand (7) an den Stegen (6), die Deckwand (7) Ausnehmungen, vorzugsweise Bohrungen aufweist, die mittels eines Schweißvorganges mit Schweißmaterial gefüllt sind.

## Claims

1. A system for cooling a generator (2) and turbine disposed in a shaft surrounded by running water, a drive unit (3) preferably being provided between the generator (2) and the turbine, characterised in that the medium in a primary circuit for cooling the generator (2) can be re-cooled in suitable heat-exchangers (11, 12, 13) in a secondary cooling circuit, and the medium in the secondary cooling circuit can be recooled in cooling radiators (14) formed by the wall (4) of the shaft, which is preferably of metal.

2. A cooling system according to claim 1, characterised in that the heat exchangers (11, 12, 13) comprise air-water coolers (13) for the generator-cooling air and oil-water coolers (11, 12) for cooling the bearing oil and the drive-unit oil.

3. A cooling system according to claim 1 or 2, characterised in that the shaft wall (4), which is a sheet-metal jacket in a direct flow of running water, has vertical or horizontal duct-like cooling pockets (8) on the generator side.

4. A cooling system according to claim 3, characterised in that the cooling pockets (8) on both sides are connected by collecting ducts (9).

5. A cooling system according to claim 3 or 4, characterised in that the cooling pockets (8) are in the form of webs (6) welded to the shaft wall (4) and closed by a covering wall (7).

6. A cooling system according to claim 5, characterised in that for the purpose of securing the covering wall (7) to the webs (6), the covering wall (7) has recesses, preferably bores, which are filled with welding material during a welding operation.

## Revendications

1. Circuit de refroidissement pour un générateur (2) et une turbine, agencés dans un puits entouré par l'eau courante, dans lequel est prévu de préférence un mécanisme (3) entre le générateur (2) et la turbine, caractérisé en ce que le fluide d'un circuit de refroidissement primaire, qui refroidit le générateur (2), peut être refroidi dans un circuit de refroidissement secondaire et le fluide du circuit de refroidissement secondaire peut être refroidi en retour dans des radiateurs de refroidissement (14) qui sont formés avec la paroi (4) du puits, qui est de préférence métallique.

2. Système de refroidissement selon la revendication 1, caractérisé en ce que les échangeurs de chaleur (11, 12, 13) sont constitués, d'une part, par un refroidisseur air-eau (13) pour l'air de refroidissement du générateur et, d'autre part, par des refroidisseurs huile-eau (11, 12) pour le refroidissement de l'huile des paliers et éventuellement de l'huile du mécanisme.

3. Système de refroidissement selon la revendication 1 ou 2, caractérisé en ce que la paroi (4) du puits, qui est directement léchée extérieurement par l'eau courante, et qui est constituée par une enveloppe en tôle, présente des poches de refroidissement (8) en forme de canaux, verticales ou horizontales, sur le côté du générateur.

4. Système de refroidissement selon la revendication 3, caractérisé en ce que les poches de refroidissement (8) sont reliées des deux côtés par de canaux collecteurs (9).

5. Système de refroidissement selon la revendication 3 ou 4, caractérisé en ce que les poches de refroidissement (8) sont formées par des nervures (6) soudées sur la paroi (4) du puits, qui sont fermées par une paroi de recouvrement (7).

6. Système de refroidissement selon la revendication 5, caractérisé en ce que, une vue de sa fixation aux nervures (6), la paroi de recouvrement (7) présente des évidements, de préférences des perçages, qui sont comblés avec de la soudure par une opération de soudage.
